# EUROPÄISCHE PATENTSCHRIFT

(11) **EP 0 930 682 B1**
(45) Veröffentlichungstag und Bekanntmachung des Hinweises auf die Patenterteilung: **24.04.2002**
(21) Anmeldenummer: 99100359.1
(22) Anmeldetag: 15.01.1999
(51) Int. Cl.: H02G 1/12

(54) **Verfahren und Vorrichtung zum Entfernen des Aussenmantels vom Endbereich eines Kabels**
Method and device for removing the outer layer of a cable end
Procédé et appareil pour enlever la gaine extérieure de l'extrémité d'un câble

(30) Priorität: 16.01.1998 DE 19801538
(43) Veröffentlichungstag der Anmeldung: 21.07.1999
(73) Patentinhaber: HA Kabeltechnik, A. Haderlapp, 81673 München (DE)
(72) Erfinder: Haderlapp, Alfred, 81549 München (DE)
(74) Vertreter: Paustian, Othmar, Dr.-Ing

(56) Entgegenhaltungen:
- US-A- 3 959 877
- US-A- 4 142 290

## Beschreibung

Die Erfindung bezieht sich auf ein Verfahren zum Entfernen des Außenmantels vom Endbereich eines Kabels, insbesondere eines Vollmantelkabels oder beispielsweise eines Kabels, dessen Außenmantel aus einem in Zinn eingebetteten Drahtgeflecht besteht, wobei der Außenmantel in Umfangsrichtung des Kabels geschlitzt wird. Die Erfindung bezieht sich außerdem auf Vorrichtungen zur Durchführung des Verfahrens.

Es ist bekannt, insbesondere bei Koaxialkabeln, den Außenmantel im Kabelendbereich zu entfernen, indem in einem vorgegebenen Abstand vom Kabelende mittels um den Kabelumfang herumrotierender Messer in Umfangsrichtung ein Schlitz in den Außenmantel eingeschnitten wird. In der US-A-3,959,877 wird eine Vorrichtung vorgeschlagen, die ein Rohr zum Hindurchführen eines Kabels und eine an dem Rohr befestigte, quer zu diesem verschiebliche Kreissäge aufweist. Das Rohr kann an dem hindurchgeführten Kabel um dessen Längsachse drehbar befestigt werden. Im Bereich der Kreissäge ist in der Rohrwandung ein längliches, sich in Umfangsrichtung des Rohres erstreckendes Fenster ausgebildet, in das ein Abschnitt der Kreissäge durch Verschieben der Kreissäge hineingeführt werden kann. Zum Entfernen des Außenmantels wird der Endbereich eines Kabels soweit in das Rohr hineingeschoben, bis die Stelle des Kabels, an der der Schlitz ausgeführt werden soll, im Fenster des Rohrs liegt. Nun wird das Rohr am Kabel befestigt und die Kreissäge in das Fenster hineingeführt, wobei der Außenmantel bis auf die gewünschte Tiefe geschlitzt wird. Dann werden Rohr und Kreissäge um 360° um das Kabel herumgeführt, um den Außenmantel in Umfangsrichtung vollständig zu schlitzen.

Bei Koaxialkabeln, deren Außenmantel aus einem nichtverzinnten Drahtgeflecht besteht, verlieren durch diesen Schlitz die einzelnen Fasern des Drahtgeflechtes ihren Zusammenhalt, wodurch das Drahtgeflecht zwischen dem Schlitz und dem Kabelende zerbröselt. Die Fasern fallen in diesem Bereich entweder von selbst vom Dielektrikum ab oder können von diesem leicht weggewischt werden. Bei Vollmantelkabeln oder bei den oben beschriebenen Kabeln mit in Zinn eingebettetem Drahtgeflecht oder ähnlichen Kabeln löst sich jedoch der Außenmantel beim Schneiden des Umfangsschlitzes nicht auf, sondern er muß in einem getrennten Arbeitsgang entfernt werden, beispielsweise mit beträchtlichem Kraftaufwand von Hand abgezogen werden, falls dies überhaupt möglich ist. Darüber hinaus verschleißen die Messer bei solchen Kabeln überaus schnell, so daß hohe Werkzeugkosten anfallen.

Demgegenüber liegt die Aufgabe der vorliegenden Erfindung darin, ein Verfahren und eine Vorrichtung bereitzustellen, mit dem der Außenmantel im Endbereich von Kabeln, insbesondere von Vollmantelkabeln oder dergleichen, einfacher und schneller bei hoher Genauigkeit entfernt werden kann.

Erfindungsgemäß wird zur Lösung dieser Aufgabe ein Verfahren vorgeschlagen, das folgende Schritte umfaßt:
Vorsehen eines kreisförmigen rotierenden Trennblattes; Positionieren des Kabelendbereiches am Umfangsbereich des Trennblattes der Art, daß die Kabelachse parallel zur Rotationsachse des Trennblattes verläuft, die Kabelendfläche dem Trennblatt zugewandt ist und das Trennblatt ausschließlich den Außenmantel bis zu dessen Innendurchmesser überdeckt;
Vorschieben des Kabelendbereiches längs der Rotationsachse des Trennblattes, bis der Außenmantel auf einer vorgegebenen Länge geschlitzt ist;
anschließend Drehen des Kabelendbereiches um mindestens 360° um die Kabellängsachse, so daß der Außenmantel in Umfangsrichtung geschlitzt wird; und
Abstreifen des geschlitzten Außenmantelabschnitts.

Durch die erfindungsgemäßen Verfahrensschritte kann der Aussenmantel eines Kabels in einem Arbeitsgang leicht im Endbereich des Kabels entfernt werden. Da das Kabel quer zu einem rotierenden Trennblatt an dessen Umfangswand vorbeigeschoben wird, wobei das Trennblatt den Außenmantel bis zu dessen Innendurchmesser, d.h. bei Koaxialkabeln bis zum Dielektrikum, aufschlitzt, wird in diesem Bereich die Spannung aus dem Aussenmantel herausgenommen. Wenn das Kabel so weit vorgeschoben wurde, daß der Außenmantel über die abzutrennende Länge geschlitzt ist, muß das Kabel lediglich vollständig um seine Längsachse gedreht werden, um den Außenmantel in Umfangsrichtung durchgehend zu schlitzen, wodurch nun der abzutrennende Außenmantelabschnitt vollständig von dem restlichen Kabel gelöst ist und abgestreift werden kann. Bei genauer Anordnung des Trennblattes und des Kabels zueinander kann somit durch einfaches Vorschieben und Drehen des Kabels sowie anschliessendes Abstreifen der Außenmantel über eine gewünschte Länge im Endbereich eines Kabels entfernt werden.

In einer bevorzugten Weiterbildung der Erfindung wird zum Abstreifen des geschlitzten Außenmantelabschnitts der Kabelendbereich längs der Rotationsachse des Trennblattes zurückgezogen, wobei der längsgeschlitzte Außenmantelabschnitt teilweise am Trennblatt anliegt und dadurch vom Kabelendbereich abgestreift wird. Hierdurch wird das Verfahren weiter vereinfacht, da das Trennblatt nun auch noch zum Abstreifen des abgetrennten Außenmantelabschnitts eingesetzt wird. Wenn das Kabel in der relativen Lage zum Trennblatt zurückgezogen wird, in der es vorgeschoben wurde, bleibt der abgetrennte Außenmantelabschnitt am Trennblatt hängen und wird so vom Kabelendbereich heruntergeschoben.

Bei einer erfindungsgemäßen Vorrichtung zur Durchführung des Verfahrens, mit einem kreisförmigen, rotierbar gelagerten Trennblatt, einer Einrichtung zum Antrieb des Trennblattes in Rotationsrichtung und einer im Umfangsbereich des Trennblattes angeordneten Hülse, die sich in ihrer Längsrichtung von einem Bereich in Vorschubrichtung des Kabelendbereiches vor dem Trennblatt aus erstreckt und deren Längsachse parallel zur Rotationsachse des Trennblattes verläuft und deren beide Enden offen sind, wobei der Abstand zwischen der Rotationsachse des Trennblattes und der Längsachse der Hülse so gewählt ist, daß das Trennblatt bei einem in die Hülse eingeschobenen Kabelendbereich ausschließlich den Außenmantel bis zu dessen Innendurchmesser überdeckt, erstreckt sich die Hülse nur bis zum Trennblatt und entspricht ihr Innendurchmesser dem Außendurchmesser des Kabels, um als Führung für den Kabelendbereich zu dienen.

Durch die Anordnung einer zum Trennblatt genau ausgerichteten Führung für das Kabel, wobei die Führung das Kabel weitgehend spielfrei aufnimmt, wird eine Zwangsführung erreicht, und damit ein exaktes Schlitzen des Außenmantels bis zu dessen Innendurchmesser sowohl in der Längsrichtung aus als auch in Umfangsrichtung gewährleistet.

Bei einer weiteren erfindungsgemäßen Vorrichtung zur Durchführung des Verfahrens, mit einem kreisförmigen, rotierbar gelagerten Trennblatt, einer Einrichtung zum Antrieb des Trennblattes in Rotationsrichtung und einer im Umfangsbereich des Trennblattes angeordneten Hülse, die sich in ihrer Längsrichtung von einem Bereich in Vorschubrichtung des Kabelendbereiches vor dem Trennblatt über das Trennblatt hinaus erstreckt und deren Längsachse parallel zur Rotationsachse des Trennblattes verläuft und deren vor dem Trennblatt liegendes Ende offen ist, wobei der Abstand zwischen der Rotationsachse des Trennblattes und der Längsachse der Hülse so gewählt ist, daß das Trennblatt bei einem in die Hülse eingeschobenen Kabelendbereich ausschließlich den Außenmantel bis zu dessen Innendurchmesser überdeckt, entspricht der Innendurchmesser der Hülse dem Außendurchmesser des Kabels, um als Führung für den Kabelendbereich zu dienen, und weist die Führung auf der dem Trennblatt zugewandten Seite eine längliche, in Längsrichtung verlaufende Aussparung auf, die unmittelbar vor dem Trennblatt beginnt, sich hinter dem Trennblatt weiter erstreckt und ein Herausfallen des abgetrennten Außenmantelabschnitts gewährleistet.

Hierdurch wird die Genauigkeit beim Einbringen der Schlitze weiter erhöht, da das Kabel auch direkt im Bereich des Trennblattes und darüber hinaus geführt wird und so die Bewegungsmöglichkeit des Kabels beim Einbringen der Schlitze weiter eingeschränkt wird. Dabei ist eine Aussparung vorgesehen, durch die der abgetrennte Außenmantelabschnitt beim Zurückziehen des Kabels aus der Führung herausfallen kann.

Vorzugsweise ist das Trennblatt als Sägeblatt ausgebildet. Hierdurch wird eine saubere Schneidwirkung bei langen Standzeiten erreicht.

Das Trennblatt kann auch als blattartiger Trennfräser ausgebildet sein. Gegenüber einem Sägeblatt, das nur in Umfangsrichtung des Blattes schneidet, übt ein blattartiger Trennfräser auch in Axialrichtung eine Schneidwirkung aus. Hierdurch wird eine noch schnellere und sauberere Schneidwirkung bei längeren Standzeiten erreicht.

In einer bevorzugten Weiterbildung der Erfindung ist eine Einrichtung zum Einstellen des Abstandes zwischen der Rotationsachse des Trennblattes und der Längsachse der Führung vorgesehen. Mit diesen Maßnahmen kann bei Kabeln, die z.B. bei gleichem Außendurchmesser unterschiedliche Außenmanteldicken aufweisen, der Abstand zwischen Führung und Trennblatt den Erfordernissen angepaßt werden, um ein Schlitzen des Aussenmantels genau bis zu seinem Innendurchmesser zu gewährleisten.

Von Vorteil ist es, wenn der Innendurchmesser der Führung an den Aüßendurchmesser des Kabels anpaßbar ist. Mit diesen Maßnahmen wird erreicht, daß das Kabel in der Führung möglichst spielfrei geführt und so die Genauigkeit des Schlitzens erhöht wird.

Dabei ist besonders bevorzugt die Führung austauschbar. Die Anpassung des Innendurchmessers der Führung an den Außendurchmesser des Kabels ist hierdurch auf besonders einfache Weise möglich.

In einer bevorzugten Ausführungsform der Erfindung ist in Vorschubrichtung des Kabelendbereiches ein Anschlag zur Begrenzung der Vorschubbewegung vorgesehen. Damit kann in Kabellängsrichtung die Länge des Schlitzes genauer und einfacher eingehalten werden.

Ganz besonders bevorzugt ist dabei der Anschlag in Vorschubrichtung des Kabelendbereiches verstellbar. Mit dieser Maßnahme ist eine problemlose Anpassung an unterschiedliche gewünschte Längen eines zu entfernenden Außenmantelabschnitts möglich.

Nachfolgend wird die Erfindung anhand der Zeichnung beispielshalber noch näher erläutert.

Es zeigen:

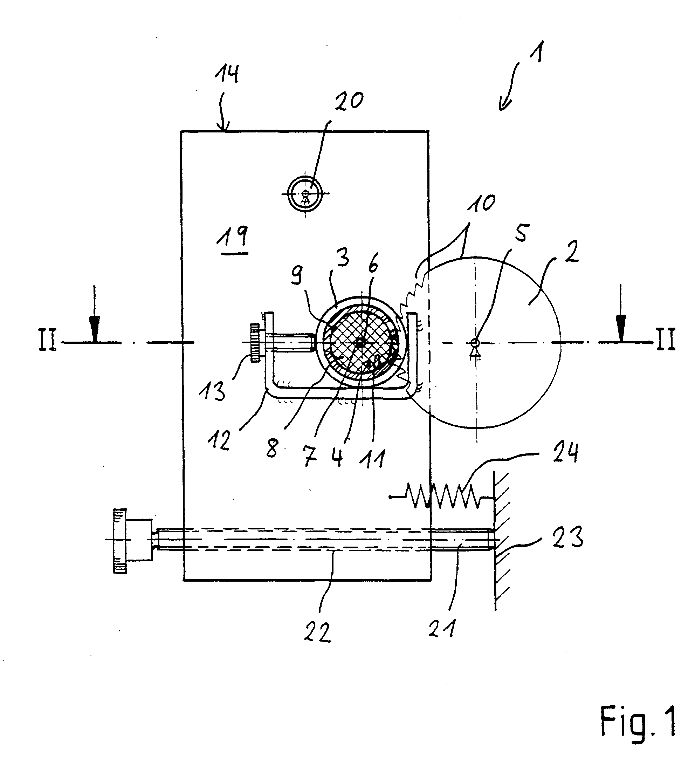

- Figur 1 -: in schematischer Darstellung eine Vorderansicht einer erfindungsgemässen Vorrichtung längs Linie I-I in Figur 2;
- Figur 2 -: eine Querschnittsansicht längs Linie II-II in Figur 1;
- Figur 3 -: eine Querschnittsansicht in Längsrichtung durch den Endbereich eines Koaxialkabels mit noch nicht entferntem Außenmantel längs Linie III-III in Figur 4;
- Figur 4 -: eine Vorderansicht längs Pfeil IV in Figur 3;
- Figur 5 -: eine Querschnittsansicht in Längsrichtung durch den Endbereich des Koaxialkabels aus Figur 3, mit in Längsrichtung geschlitztem Außenmantel längs Linie V-V in Figur 6;
- Figur 6 -: eine Vorderansicht längs Pfeil VI in Figur 5;
- Figur 7 -: eine Seitenansicht des Kabels aus Figur 3, mit auch in Umfangsrichtung geschlitztem Außenmantel;
- Figur 8 -: eine Seitenansicht des Kabels aus Figur 3, mit teilweise abgestreiftem abgetrennten Außenmantelabschnitt, längs Pfeil VIII in Figur 9;
- Figur 9 -: eine Vorderansicht längs Pfeil IX in Figur 8 und
- Figur 10 -: eine Seitenansicht in Längsrichtung des Kabels aus Figur 3, mit vollständig abgestreiftem abgetrennten Außenmantelabschnitt.

Die in den Figuren dargestellte Vorrichtung 1 weist ein Sägeblatt 2 und eine in der Nähe des Umfangs des Sägeblattes 2 angeordnete, an beiden Enden offene, hülsenförmige Führung 3 für ein Kabel 4 auf. Das Sägeblatt 2 ist um eine ortsfeste Rotationsachse 5 rotierbar gelagert. Die Führung 3 weist eine Längsachse 6 auf, die parallel zur Rotationsachse 5 des Sägeblattes 2 verläuft. In der Führung 3 gleitet ein Koaxialkabel 4, das einen Innenleiter 7, ein Dielektrikum 8 und als Außenmantel einen Außenleiter 9 aufweist. Der Außendurchmesser des Außenleiters bzw. des Außenmantels 9 entspricht dem Innendurchmesser der hülsenförmigen Führung 3. Der Abstand zwischen der Rotationsachse 5 des Sägeblattes 2 und der Längsachse 6 der Führung 3 bzw. des Kabels 4 ist so gewählt, daß der Außenumfang 10 des Sägeblattes 2, d.h. die Spitzen der (nur im Bereich der Führung 3 dargestellten) Sägezähne, gerade bis zum Innendurchmesser 11 des Außenmantels 9 des in der Führung 3 befindlichen Koaxialkabels 4 reicht bzw. reichen.

Die Führung 3 ist in einer Halteeinrichtung 12 gehaltert, die im dargestellten Beispiel als U-Profil ausgeführt ist. Die Führung 3 wird in dem U-Profil 12 über eine geeignete Befestigung, beispielsweise mittels einer ein Schenkel des U-Profils 12 durchlaufenden Klemmschraube 13, lösbar arretiert. Der Abstand zwischen den Innenwänden der Schenkel wird so groß gewählt, daß Hülsen bzw. Führungen 3 mit unterschiedlichen Außendurchmessern zwischen ihnen aufgenommen und lösbar arretiert werden können. Ein einfacher und schneller Austausch der Führungen 3 zur Anpassung an die jeweiligen Kabelaußendurchmesser ist auf diese Weise problemlos möglich. Das U-Profil 12 ist an einer Schwenkeinrichtung 14 starr befestigt, mit der der Abstand des U-Profils 12 und damit der der Führung 3 und des in der Führung 3 befindlichen Kabels 4 zum Sägeblatt 2 eingestellt werden kann.

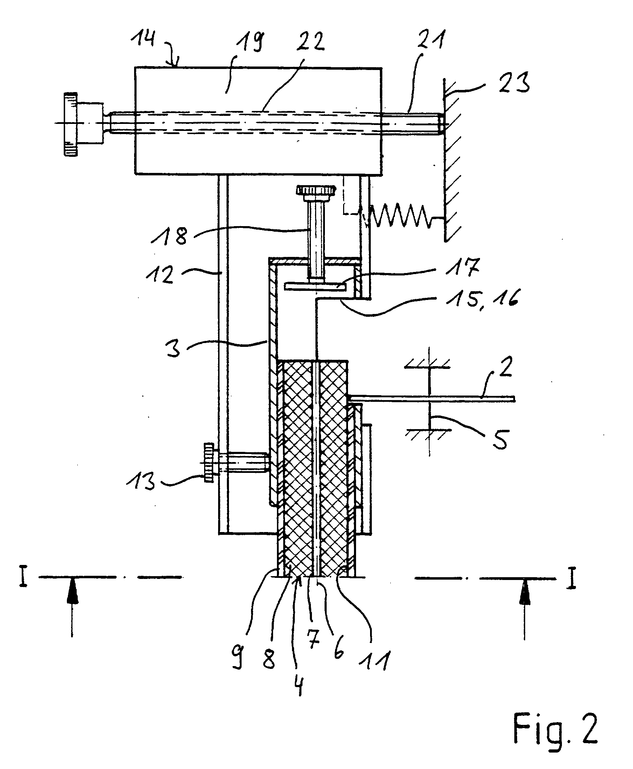

Wie aus Figur 2 ersichtlich ist, weisen sowohl das U-Profil 12 als auch die Führung 3 auf jeweils der dem Sägeblatt 2 zugewandten Seite eine Aussparung 15, 16 auf, in die das Sägeblatt 2 eingreift. Diese Aussparungen 15, 16 werden so groß gewählt, daß der abgetrennte Außenmantelabschnitt des Kabels beim Zurückziehen des Kabels dort leicht hinausfallen kann. Hierfür ist es insbesondere von Vorteil, wenn die Aussparung 15 in der Führung 3 etwas nach unten gewandt ist, um das Herausfallen des abgetrennten Außenmantelabschnitts zu erleichtern.

In Figur 2 ist weiter dargestellt, daß in der Führung 3 ein Anschlag 17 angebracht ist, der mittels einer Stellschraube 18 in Längsrichtung der Führung 3 verstellbar und so an unterschiedliche gewünschte Längen von abzutrennenden Außenmantelabschnitten ohne weiteres anpaßbar ist.

Die Schwenkeinrichtung 14 weist in dem hier dargestellten Ausführungsbeispiel einen steifen Rahmen oder einen Block 19 auf, an dem die Halteeinrichtung 12 für die Führung 3 starr angebracht ist. Der Block 19 ist an einem ortsfesten Drehzapfen 20 verschwenkbar gelagert. In einem Abstand vom Drehzapfen 20 ist eine Stellschraube 21 angeordnet, die hier als Gewindeschraube ausgebildet ist und eine in dem Block 19 vorgesehene Gewindebohrung 22 durchläuft und an einem ortsfesten Anschlag 23 anliegt. Der Block 19 ist auch über eine Vorspannfeder 24 mit diesem ortsfesten Anschlag 23 verbunden. Die Vorspannfeder 24 spannt die Verschwenkeinrichtung 14 in Richtung auf den ortsfesten Anschlag vor, so daß ein ständiger Kontakt der Stellschraube 21 mit diesem Anschlag 23 gewährleistet ist. Eine Beibehaltung des eingestellten Abstandes zwischen Führung 3 und Sägeblatt 2 wird hierdurch sichergestellt. Eine Veränderung des Abstandes zwischen Führung 3 und Sägeblatt 2 wird durch Drehen der Gewinde- bzw. Stellschraube 21 in der Gewindebohrung 22 erzielt, wodurch die Länge des aus der Gewindebohrung 22 hervorstehenden Stellschraubenendes verändert und durch die damit verbundene Schwenkbewegung des Blockes 19 um den Drehzapfen 20 der Abstand zwischen Führung 3 und Sägeblatt 2 ebenfalls verändert bzw. eingestellt wird.

Um den Außenmantel 9 im Endbereich des Kabels auf einer vorgegebenen Länge zu entfernen, wird wie folgt verfahren:

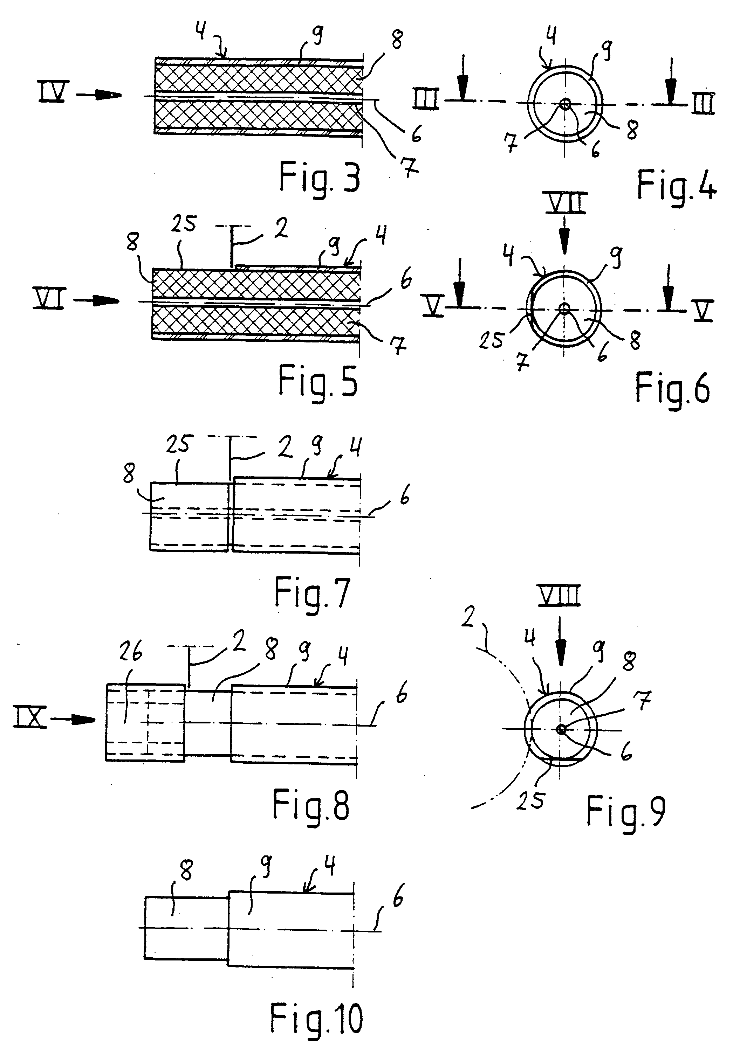

Zunächst wird eine Führung 3, deren Innendurchmesser dem Aussendurchmesser des Kabels 4 entspricht, in der Halteeinrichtung 12 festgeklemmt. Anschließend wird mit Hilfe der Stellschraube 21 der Abstand der Führung 3 vom Sägeblatt 2 so eingestellt, daß die Spitzen 10 der Sägezähne in der Verlängerung in Längsrichtung des Innendurchmessers 11 des abzutrennenden Außenmantels 9 liegen. Der Anschlag 17 in der Führung 3 wird auf den gewünschten Abstand zum Sägeblatt 2 eingestellt, wobei dieser Abstand der gewünschten Länge des abzutrennenden Außenmantelabschnitts entspricht. Dann wird der Antrieb des Sägeblattes 2 eingeschaltet und das Kabel 4 in die Führung 3 geschoben. In den Figuren 3 und 4 ist als Beispiel ein Koaxialkabel 4 mit einem Innenleiter 7, einem Dielektrikum 8 und einem Außenleiter 9 im Ausgangszustand dargestellt. Das Kabel 4 wird soweit vorgeschoben, bis die Endfläche des Kabels 4 am Anschlag 17 anliegt. Durch das Vorschieben am rotierenden Sägeblatt 2 vorbei wird in dem Außenmantel 9 ein Längsschlitz 25 erzeugt, wie er in den Figuren 5 und 6 dargestellt ist. Wenn das Kabel 4 mit seiner Endfläche am Anschlag 17 anliegt, wird es um mindestens 360° um seine Längsachse 6 gedreht, wodurch das Sägeblatt 2 den Außenmantel 9 auch in Umfangsrichtung bis zu dessen Innendurchmesser 11, d.h. bis zum Dielektrikum 8 schlitzt (Figur 7). Nach der vollständigen Drehung des Kabels 4 wird dieses wieder aus der Führung 3 herausgezogen, wobei der abgetrennte Außenmantelabschnitt 26 am Sägeblatt 2 hängen bleibt (Figur 9) und dadurch vom Endbereich des Kabels abgestreift wird (Figur 8), bis schließlich der abgetrennte Außenmantelabschnitt 26 vollständig vom Endbereich des Kabels 4 entfernt ist (Figur 10).

## Patentansprüche

1. Verfahren zum Entfernen des Außenmantels vom Endbereich eines Kabels, insbesondere eines Vollmantelkabels oder dergleichen, mit den folgenden Schritten:
- Vorsehen eines kreisförmigen rotierenden Trennblattes (2);
- Positionieren des Kabelendbereiches am Umfangsbereich (10) des Trennblattes(2) derart, daß die Kabelachse (6) parallel zur Rotationsachse (5) des Trennblattes (2) verläuft, die Kabelendfläche dem Trennblatt (2) zugewandt ist und das Trennblatt (2) ausschließlich den Außenmantel bis zu dessen Innendurchmesser (11) überdeckt:
- Vorschieben des Kabelendbereiches längs der Rotationsachse (5) des Trennblattes (2), bis der Außenmantel (9) auf einer vorgegebenen Länge geschlitzt ist;
- anschließend Drehen des Kabelendbereiches um mindestens 360° um die Kabellängsachse (6), so daß der Außenmantel (9) in Umfangsrichtung vollständig geschlitzt wird, und
- Abstreifen des geschlitzten Außenmantelabschnittes (26).

2. Verfahren nach Anspruch 1,
**dadurch gekennzeichnet,**
**daß** zum Abstreifen des geschlitzten Außenmantelabschnitts (26) der Kabelendbereich längs der Rotationsachse (5) des Trennblattes (2) zurückgezogen wird, wobei der längsgeschlitzte Außenmantelabschnitt (26) teilweise am Trennblatt (2) anliegt und dadurch vom Kabelendbereich abgestreift wird.

3. Vorrichtung zur Durchführung des Verfahrens nach Anspruch 1 oder 2, mit einem kreisförmigen, rotierbar gelagerten Trennblatt (2), einer Einrichtung zum Antrieb des Trennblattes in Rotationsrichtung und einer im Umfangsbereich (10) des Trennblattes (2) angeordneten Hülse, die sich in ihrer Längsrichtung von einem Bereich in Vorschubrichtung des Kabelendbereiches vor dem Trennblatt (2) aus erstreckt und deren Längsachse (5) parallel zur Rotationsachse (5) des Trennblattes (2) verläuft und deren beide Enden offen sind, wobei der Abstand zwischen der Rotationsachse (5) des Trennblattes (2) und der Längsachse (6) der Hülse (3) so gewählt ist, daß das Trennblatt (2) bei einem in die Hülse (3) eingeschobenen Kabelendbereich ausschließlich den Außenmantel (9) bis zu dessen Innendurchmesser (11) überdeckt,
**dadurch gekennzeichnet,**
**daß** die Hülse (3) sich nur bis zum Trennblatt (2) erstreckt und ihr Innendurchmesser dem Außendurchmesser des Kabels entspricht, um als Führung (3) für den Kabelendbereich zu dienen.

4. Vorrichtung zur Durchführung des Verfahrens nach Anspruch 1 oder 2, mit einem kreisförmigen, rotierbar gelagerten Trennblatt (2), einer Einrichtung zum Antrieb des Trennblattes in Rotationsrichtung und einer im Umfangsbereich (10) des Trennblattes (2) angeordneten Hülse, die sich in ihrer Längsrichtung von einem Bereich in Vorschubrichtung des Kabelendbereiches vor dem Trennblatt (2) über das Trennblatt (2) hinaus erstreckt und deren Längsachse (5) parallel zur Rotationsach- - se (5) des Trennblattes (2) verläuft und deren vor dem Trennblatt liegendes Ende offen ist, wobei der Abstand zwischen der Rotationsachse (5) des Trennblattes (2) und der Längsachse (6) der Hülse (3) so gewählt ist, daß das Trennblatt (2) bei einem in die Hülse (3) eingeschobenen Kabelendbereich ausschließlich den Außenmantel (9) bis zu dessen Innendurchmesser (11) überdeckt,
**dadurch gekennzeichnet,**
**daß** der Innendurchmesser der Hülse (3) dem Außendurchmesser des Kabels (4) entspricht, um als Führung (3) für den Kabelendbereich zu dienen, und daß die Führung (3) auf der dem Trennblatt (2) zugewandten Seite eine längliche, in Längsrichtung verlaufende Aussparung (15) aufweist, die unmittelbar vor dem Trennblatt beginnt, sich hinter dem Trennblatt (2) weiter erstreckt und ein Herausfallen des abgetrennten Außenmantelabschnitts (26) gewährleistet.

5. Vorrichtung nach Anspruch 3 oder 4,
**dadurch gekennzeichnet,**
**daß** das Trennblatt als Sägeblatt (2) ausgebildet ist.

6. Vorrichtung nach Anspruch 3 oder 4,
**dadurch gekennzeichnet,**
**daß** das Trennblatt als blattartiger Trennfräser ausgebildet ist.

7. Vorrichtung nach einem der Ansprüche 3 bis 6,
**dadurch gekennzeichnet,**
**daß** eine Einrichtung (14) zum Einstellen des Abstandes zwischen der Rotationsachse (5) des Trennblattes (2) und der Längsachse (6) der Führung (3) vorgesehen ist.

8. Vorrichtung nach einem der Ansprüche 3 bis 7,
**dadurch gekennzeichnet,**
**daß** der Innendurchmesser der Führung an den Außendurchmesser des Kabels (4) anpaßbar ist.

9. Vorrichtung nach Anspruch 8,
**dadurch gekennzeichnet,**
**daß** die Führung (3) austauschbar ist.

10. Vorrichtung nach einem der Ansprüche 3 bis 9,
**dadurch gekennzeichnet,**
**daß** in Vorschubrichtung des Kabelendbereiches ein Anschlag (17) zur Begrenzung der Vorschubbewegung vorgesehen ist.

11. Vorrichtung nach Anspruch 10,
**dadurch gekennzeichnet,**
**daß** der Anschlag (17) in Vorschubrichtung des Kabelendbereiches verstellbar ist.

## Claims

1. A method for removing the outer sheath from a cable end, in particular, a fully sheathed cable or the like, comprising the following steps:
- providing a rotating circular cutting blade (2);
- positioning the cable end region on the circumferential region (10) of the cutting blade (2) in such a way that the cable axis (6) extends parallel to the rotational axis (5) of the cutting blade (2), that the end face of the cable faces the cutting blade (2), and that the cutting blade (2) only overlaps the outer sheath up to its inside diameter (11);
- advancing the cable end region along the rotational axis (5) of the cutting blade (2) until the outer sheath (9) is slotted over a predetermined length;
- subsequently turning the cable end region about the longitudinal cable axis (6) by at least 360° such that the outer sheath (9) is completely slotted in the circumferential direction, and
- stripping off the slotted outer sheath section (26).

2. The method according to Claim 1, **characterized by** the fact that the cable end region is retracted along the rotational axis (5) of the cutting blade (2) in order to strip off the slotted outer sheath section (26), wherein the longitudinally slotted outer sheath section (26) partially adjoins the cutting blade (2) and is thusly stripped off the cable end region.

3. The device for carrying out the method according to Claim 1 or 2, with a rotatable circular cutting blade (2), with a device for driving the cutting blade in the rotating direction, and with a sleeve that is arranged in the circumferential region (10) of the cutting blade (2) and longitudinally extends from a region that is situated in front of the cutting blade (2) viewed in the advancing direction of the cable end region, wherein the longitudinal axis (5) of said sleeve extends parallel to the rotational axis (5) of the cutting blade (2) and the sleeve is open on both ends, and wherein the distance between the rotational axis (5) of the cutting blade (2) and the longitudinal axis (6) of the sleeve (3) is chosen such that the cutting blade (2) only overlaps the outer sheath (9) of the cable up to its inside diameter (11) when a cable end region is inserted into the sleeve (3), **characterized by** the fact that the sleeve (3) only extends up to the cutting blade (2) and its inside diameter corresponds to the outside diameter of the cable such that it can serve as a guide (3) for the cable end region.

4. The device for carrying out the method according to Claim 1 or 2, with a rotatable circular cutting blade (2), with a device for driving the cutting blade in the rotating direction, and with a sleeve that is arranged in the circumferential region (10) of the cutting blade (2) and longitudinally extends beyond the cutting blade (2) from a region that is situated in front of the cutting blade (2) viewed in the advancing direction of the cable end region, wherein the longitudinal axis (5) of said sleeve extends parallel to the rotational axis (5) of the cutting blade (2) and the sleeve is open on the end that lies in front of the cutting blade, and wherein the distance between the rotational axis (5) of the cutting blade (2) and the longitudinal axis (6) of the sleeve (3) is chosen such that the cutting blade (2) only overlaps the outer sheath (9) of the cable up to its inside diameter (11) when a cable end region is inserted into the sleeve (3), **characterized by** the fact that the inside diameter of the sleeve (3) corresponds to the outside diameter of the cable (4) such that it can serve as a guide (3) for the cable end, and by the fact that the guide (3) contains an oblong recess (15) that extends in the longitudinal direction on the side that faces the cutting blade (2), wherein said recess begins directly in front of the cutting blade and continues behind the cutting blade (2) such that the separated outer sheath section (26) is prevented from falling out.

5. The device according to Claim 3 or 4, **characterized by** the fact that the cutting blade is realized in the form of a saw blade (2).

6. The device according to Claim 3 or 4, **characterized by** the fact that the cutting blade is realized in the form of a blade-like milling cutter.

7. The device according to one of Claims 3-6, **characterized by** the fact that a device (14) is provided for adjusting the distance between the rotational axis (5) of the cutting blade (2) and the longitudinal axis (6) of the guide (3).

8. The device according to one of Claims 3-7, **characterized by** the fact that the inside diameter of the guide can be adapted to the outside diameter of the cable (4).

9. The device according to Claim 8, **characterized by** the fact that the guide (3) can be exchanged.

10. The device according to one of Claims 3-9, **characterized by** the fact that a limit stop (17) is arranged in the advancing direction of the cable end region in order to limit the advance of the cable.

11. The device according to Claim 10, **characterized by** the fact that the limit stop (17) can be adjusted in the advancing direction of the cable end region.

## Revendications

1. Procédé pour enlever la gaine extérieure de la partie d'extrémité d'un câble, notamment d'un câble à parois pleines ou analogue, comprenant les stades suivants :
- on prend une lame (2) de coupe tournante de forme circulaire ;
- on met la partie d'extrémité du câble en position sur la partie (10) de pourtour de la lame (2) de coupe, de façon que l'axe (6) du câble s'étende parallèlement à l'axe (5) de rotation de la lame (2) de coupe, que la surface d'extrémité du câble soit tournée vers la lame (2) de coupe et que la lame (2) de coupe recouvre exclusivement la gaine extérieure jusqu'à son diamètre (11) intérieur;
- on fait avancer la partie d'extrémité du câble le long de l'axe (5) de rotation de la lame (2) de coupe jusqu'à ce que la gaine (9) extérieure soit fendue sur une longueur donnée à l'avance ;
- on fait ensuite tourner la partie d'extrémité du câble d'au moins 360° par rapport à l'axe(6) longitudinal du câble de sorte que la gaine (9) extérieure soit entièrement fendue dans la direction du pourtour, et
- on enlève le tronçon (26) de gaine extérieure qui a été fendu.

2. Procédé suivant la revendication 1,
**caractérisé**
**en ce que** pour enlever le tronçon (26) de gaine extérieure qui a été fendu, on fait revenir la partie d'extrémité du câble le long de l'axe (5) de rotation de la lame (2) de coupe, le tronçon (26) de gaine extérieure qui a été fendu longitudinalement s'appliquant en partie à la lame (2) de coupe et étant enlevé ainsi de la partie d'extrémité du câble.

3. Dispositif pour la mise en oeuvre du procédé suivant la revendication 1 ou 2, comprenant une lame (2) de coupe de forme circulaire et montée tournante, un dispositif d'entraînement de la lame de coupe dans un sens de rotation et un manchon qui est disposé dans la partie (10) de pourtour de la lame (2) de coupe, qui s'étend dans sa direction longitudinale à partir d'une zone de la partie d'extrémité du câble qui est en amont, dans la direction d'avance, de la lame (2) de coupe, dont l'axe (5) longitudinal s'étend parallèlement à l'axe (5) de rotation de la lame (2) de coupe et dont les deux extrémités sont ouvertes, la distance entre l'axe (5) de rotation de la lame (2) de coupe et l'axe (6) longitudinal du manchon (3) étant choisi de façon que la lame (2) de coupe recouvre pour une partie d'extrémité de câble enfilée dans le manchon(3) exclusivement la gaine(9) extérieure jusqu'à son diamètre(11) intérieur, **caractérisé en ce que** le manchon ne s'étend que jusqu'à la lame (2) de coupe et son diamètre intérieur correspond au diamètre extérieur du câble afin de servir de pièce (3) de guidage de la partie d'extrémité du câble.

4. Dispositif pour la mise en oeuvre du procédé suivant la revendication 1 ou 2, comprenant une lame (2) de coupe de forme circulaire et montée tournante, un dispositif d'entraînement de la lame de coupe dans un sens de rotation et un manchon qui est disposé dans la partie (10) de pourtour de la lame (2) de coupe, qui s'étend dans sa direction longitudinale à partir d'une zone en amont de la lame (2) de coupe, dans la direction d'avance de la partie d'extrémité du câble, dont l'axe (5) longitudinal s'étend parallèlement à l'axe(5) de rotation de la lame(2) de coupe et dont l'extrémité en amont de la lame de coupe est ouverte, la distance entre l'axe (5) de rotation de la lame (2) de coupe et l'axe (6) longitudinal du manchon (3) étant de choisi de façon que la lame (2) de coupe recouvre pour une partie d'extrémité de câble enfilée dans le manchon (3) exclusivement la gaine (9) extérieure jusqu'à son diamètre (11) intérieur, **caractérisé en ce que** le diamètre intérieur du manchon (3) correspond au diamètre extérieur du câble (4) pour servir de pièce (3) de guidage de la partie d'extrémité du câble, et **en ce que** la pièce (3) de guidage comporte du côté tourné vers la lame (2) de coupe un évidement (15) longitudinal qui s'étend dans la direction longitudinale, qui commence juste avant la lame de coupe qui s'étend en outre derrière la lame (2) de coupe et qui assure la chute du tronçon (26) de gaine extérieure qui a été séparé.

5. Dispositif suivant la revendication 3 ou 4, **caractérisé en ce que** la lame de coupe est constituée sous la forme d'une lame (2) de scie.

6. Dispositif suivant la revendication 3 ou 4, **caractérisé en ce que** la lame de coupe est constituée sous la forme d'une fraiseuse de coupe du type à lame.

7. Dispositif suivant l'une des revendications 3 à 6, **caractérisé en ce qu'**il est prévu un dispositif (14) de réglage de la distance entre l'axe (5) de rotation de la lame (2) de coupe et l'axe (6) longitudinal de la pièce (3) de guidage.

8. Dispositif suivant l'une des revendications 3 à 7, **caractérisé en ce que** le diamètre intérieur de la pièce de guidage peut être adapté au diamètre extérieur du câble (4).

9. Dispositif suivant la revendication 8, **caractérisé en ce que** la pièce (3) de guidage peut être remplacée.

10. Dispositif suivant l'une des revendications 3 à 9, **caractérisé en ce qu'**il est prévu dans la direction d'avance de la partie d'extrémité du câble une butée (17) de limitation du mouvement d'avance.

11. Dispositif suivant la revendication 10, **caractérisé en ce que** la butée (17) peut être réglée dans la direction d'avance de la partie d'extrémité du câble.
